# EUROPÄISCHE PATENTANMELDUNG

(11) **EP 4 241 552 A1**
(43) Veröffentlichungstag der Anmeldung: **13.09.2023**
(21) Anmeldenummer: 23160783.9
(22) Anmeldetag: 08.03.2023
(51) Int. Cl.: A01D 34/08, A01D 34/135, A01D 34/30, A01D 69/06

(54) **HANDGEFÜHRTES TRAGBARES SCHNEIDGERÄT**

(30) Priorität: 10.03.2022 DE 102022105625
(71) Anmelder: Kress, Markus, 89075 Ulm (DE)
(72) Erfinder: KRESS, Markus, 89075 Ulm (DE)
(74) Vertreter: Sawodny, Michael-Wolfgang

(57) **Zusammenfassung**

Die Erfindung betrifft eine Arbeitseinheit, bevorzugt montierbar an ein handgetriebenes Reinigungs- und Pflegegerät (4), ausgebildet mit einer Schneidvorrichtung (1); einer seitlich hinter der Schneidvorrichtung angeordneten Antriebswelle (2) parallel zu einer Schneidachse der Schneidvorrichtung. Die Antriebswelle wird über ein Getriebe (14), bevorzugt ein Kegelradgetriebe, insbesondere ein 90° Kegelradgetriebe, mit der Schneidvorrichtung verbunden ist, derart, dass eine Drehbewegung der Antriebswelle in eine oszillierende, translatorische Bewegung der Schneidvorrichtung umgesetzt wird. Über exzentrisch angeordnete Scheiben (16, 17) kann diese Umsetzung der Drehbewegung der Welle (2) bzw. der Welle (15) in eine translatorische Bewegung von Obermesser (18) und Untermesser (19) erfolgen.

## Beschreibung

Die Erfindung betrifft eine Antriebseinheit, die bevorzugt mit einem handgetriebenen Reinigungs- und Pflegegerät verbindbar ist, wobei die Antriebseinheit eine Schneidvorrichtung umfasst sowie ein handgetriebenes Reinigungs- und Pflegegerät mit Schneidvorrichtung.

Bei der Schneidvorrichtung handelt es sich um eine Schneidvorrichtung, wie sie beispielsweise zum Mähen von Gras verwendet wird. Nach dem Scherenprinzip arbeitende Schneidvorrichtung als Mähvorrichtung lassen sich gemäß dem Stand der Technik unterteilen in Balkenmäher und Grasscheren.

Balkenmäher verfügen über translatorisch oszillierende Messerklingen. Im Gegensatz hierzu oszillieren bei Grasscheren die Messer um einen Drehpunkt.

Ein rotatorisch oszillierendes System ist beispielsweise in der US 3,623,223 A gezeigt. Das in der US 3,623,223 A gezeigte System besteht aus einem feststehenden Untermesser und einem rotatorisch oszillierenden Obermesser. Hierbei wird das Obermesser durch eine Exzenterscheibe, die bevorzugt direkt mit dem Elektromotor über eine Welle verbunden ist, angetrieben.

Balkenmäher werden überwiegend in der Landwirtschaft für größere Schnittbreiten eingesetzt. Der aus der EP 2853142 A1 bekannte Balkenmäher weist beidseitig geführte Messerbalken auf. Ein handgeführter tragbarer Balkenmäher mit einseitig ausgelegtem Messerbalken zeigt WO 1999/07202 A1. Diese Messerbalken der Balkenmäher haben Schnittbreiten von ca. 500 mm bis zu mehreren Metern.

Alternativ zu den Balkenmähern können zum Grasschnitt auch Grasscheren zum Einsatz kommen. Der Vorteil von Grasscheren ist deren einfacher Aufbau. Nachteil von Grasscheren ist jedoch, dass diese in der Schnittbreite eingeschränkt sind und sich lediglich für schmale Grasstreifen eignen, die beim Mähen von Flächen mit handelsüblichen Rasenmähern am Rand nicht erfasst werden können und somit stehen bleiben. Größere Schnittbreiten mit Grasscheren kann man nur, wie in EP 1886551 A1 gezeigt, durch Aneinanderreihen von mehreren, beispielsweise zwei Grasscherblättern erzielen.

Aus der US 2,702,978 A ist eine Antriebseinheit montierbar an ein handgetriebenes Reinigungs- und Pflegegerät bekannt geworden, wobei der Antrieb zwar in Schnittrichtung hinter dem Schneidwerk angeordnet ist, jedoch ist die vom Motor angetriebene Antriebswelle in der Mitte des Schneidbalkens symmetrisch angebracht. Gemäß der US 2,702,978 A ist der Motor im Griffbereich und die Antriebswelle im Führungsholm gelagert. Die Vorschubkraft des Anwenders, der das Gerät in Schnittrichtung und somit in Fahrtrichtung bewegt, verteilt die Kraft zu gleichen Teilen auf das linke und rechte Rad. Würde der Antrieb außermittig angeordnet, so würde dies dazu führen, dass das Gerät in Fahrtrichtung zu einer Kreisbahnbewegung neigt, weswegen in der US 2,702,978 A die Antriebswelle und der Antrieb mittig angeordnet sind. Des Weiteren wird bei der US 2,702,978 A nur das Obermesser durch einen oszillierenden Hebel in Bewegung gesetzt, wohingegen das Untermesser feststehend ausgebildet ist. In der US 2,702,978 A spannt zur Vorspannungsaufbringung eine Einstellschraube (48) im vorderen Schneidbereich des Obermessers (49) eine Feder vor, die dann auf das oszillierende Obermesser eine Kraft aufbringt. Die Anordnung hat den Nachteil, in einem für Schmutz anfälligen Bereich zu liegen. Zudem wird eine Vorspannung gegenüber dem Gehäuse aufgebracht. Das hat den Nachteil, dass alle Gehäusebauteile sehr steif mit dem Untermesser verbunden sein müssen, um die Vorspannung gegenüber dem Untermesser zu erreichen.

Aus der DE 38 212 35 A1 ist ein zweirädriges, motorgetriebenes Mähgerät bekannt geworden, das der Benutzer mittels schubkarrenähnlicher Griffe vor sich herführt. Zum Antrieb der beiden, in entgegengesetzter Richtung oszillierenden Schneidmesser hat die DE 38 212 35 A1 für jedes der beiden Schneidmesser eine mittige Antriebswelle, ebenso wie bei der US 2,702,978 A.

Die DE 10 2005 049 665 A1 offenbart ein Schneidgerät mit einer austauschbaren Messeranordnung, welches zwei oszillierende, relativ zueinander bewegbare Messer umfasst.

Die KR 20 2000 0004 4787 U zeigt einen Grasschneider mit zwei Messern, die gemeinsam über ein 90° Kegelradgetriebe angetrieben werden.

In den letzten Jahren haben sich insbesondere in Kleingärten Rasenroboter stark etabliert. Rasenroboter fahren zum Schneiden von Gras autark in einen definierten Bereich nach zufälligen oder auch bestimmten Mustern. In Randbereichen, insbesondere vor Mauern oder Hausfronten, bleibt dann in der Regel Rasenstreifen von mindestens 200 mm stehen, die nicht geschnitten werden können. Derartige Randstreifen sind aber zu breit für den Einsatz einer Rasenkantenschere. Eine derartige Fläche kann dann mit Rasenscheren nur in mehreren Arbeitsgängen geschnitten werden.

Aufgabe der Erfindung ist es somit, die Nachteile des Standes der Technik zu vermeiden und insbesondere ein System anzugeben werden, dass sich dadurch auszeichnet, dass es das Schneiden eines Randbereiches von Grashalmen vor Mauern oder Hausfronten zulässt. Des Weiteren soll insbesondere ein System angegeben werden, das eine Schneidvorrichtung umfasst, wobei die Schneidvorrichtung leicht gegen andere Einsätze bzw. Werkzeuge getauscht werden kann und von einem universellen Motor mit Getriebe, insbesondere eines handgeführten Reinigungs- und Pflegegerätes, angetrieben wird.

Eine weitere Aufgabe der vorliegenden Erfindung ist es, einen sauberen Schnitt auch der Blätter eines Rasens zur Verfügung zu stellen. Generell besteht eine Wiese aus Grashalmen, die abgeschnitten werden sollen. Die Grashalme einer Wiese umfassen wiederrum Grasstängel und Grasblätter. Die im Stand der Technik gezeigten Mähvorrichtungen mit Balken eignen sich nicht zum Schneiden von Grasblättern eines Rasens, sondern lediglich zum Schneiden von Grasstängeln einer Wiese bzw. zum Mähen einer Wiese. Sowohl Grasstängel als auch Grasblätter können allgemein als Grashalme bezeichnet werden.

Der Unterschied zwischen einer Wiese und einem Rasen ist unter anderem, dass Rasen regelmäßig gemäht werden muss. Die Höhe des Rasens liegt im Allgemeinen zwischen 1 cm und 10 cm. Wiesen hingegen haben eine Höhe von mindestens 10 cm, wobei Halme bis zu 80 cm hoch wachsen können. Während Rasen Blätter umfassen, umfassen Wiesen Halme oder Stängel. Halme oder Stängel sind Blütentriebe, rohrförmig aufgebaut und haben eine hohe Biegefestigkeit. Halme sind aufgrund ihrer Rohrform im Querschnitt beigesteif und knicken auch bei stärkeren Winden nicht um.

Ein Rasen hingegen besteht lediglich aus Blättern. Durch regelmäßiges Mähen des Rasens in kurzen Abständen können sich keine Blütentriebe und somit auch keine Stängel ausbilden. Ein Blatt eines Rasens muss, ähnlich wie bei einer Handschere, mit scharfen, unter Vorspannung stehenden Messerklingen geschnitten werden. Ist das Messer stumpf oder reicht die Vorspannung nicht aus, wird das Blatt von den Messern umgeknickt und nicht geschnitten.

Ein ausgebildeter Halm wird hingegen aufgrund seiner hohen Biegesteifigkeit immer von Messerklingen abgeschert und damit geschnitten.

Grasblätter einer Wiese werden bei nicht ausreichender Vorspannung aber nicht geschnitten, sondern lediglich umgeknickt und/oder abgerissen.

Beim Stand der Technik in Form der DE 38 212 35 A1 handelt es sich aufgrund der nicht ausreichenden Vorspannung lediglich um einen Wiesenmäher, der hier Rasenstängel bzw. Halme schneidet, ein präziser Rasenschnitt mit Rasenblättern ist mit einer derartigen Anordnung nicht möglich. Die in der DE 38 212 35 A1 beschriebenen Streben werden am Drehpunkt gegeneinander gedrückt, um ein planes Aufliegen der Messer zu erzielen. Allerdings handelt es sich dabei nicht um eine Vorspannung der erfindungsgemäßen Messerklingen, wie bei der Erfindung. Bei der DE 38 212 35 A1 werden die Messer im Schneidbereich mit Klammern zusammengehalten. Gleitbeläge sorgen dafür, dass die Messer plan aufeinanderliegen. Dadurch wird eine Vorspannung gerade vermieden.

Erfindungsgemäß wird die Aufgabe der Erfindung durch eine Arbeitseinheit gemäß Anspruch 1 gelöst.

Weiterbildungen der Erfindung sind Gegenstand von Unteransprüchen.

Die Antriebseinheit gemäß Anspruch 1 zeichnet sich dadurch aus, dass sie leicht an ein handgeführtes Reinigungs- und Pflegegerät montierbar und beispielsweise zu einer Walze austauschbar ist.

Neben der Arbeitseinheit stellt die Erfindung auch ein Reinigungs- und Pflegegerät mit einer erfindungsgemäßen Antriebseinheit und Schneidvorrichtung zur Verfügung.

Die Schneidvorrichtung der Antriebseinheit der Erfindung umfasst bevorzugt Messerbalken, die es ermöglichen, in randnahen Bereichen Grashalme zu schneiden. Erfindungsgemäß erfolgt der Antrieb bevorzugt über zwei gegeneinander angeordnete Exzenterscheiben, ähnlich wie bei Heckenscheren. Im Gegensatz zu Heckenscheren, bei denen der Antrieb immer in der Achse des Messers liegt, wird der Antrieb der Schneidvorrichtung gemäß der Erfindung parallel zur Schneidachse mittels von Exzenterscheiben vorgenommen. Um die gesamte Messerbreite auszunutzen, ist vorteilhafterweise vorgesehen, dass der Antrieb hinter dem Messerbalken angeordnet ist. Der hinter der Schneidvorrichtung liegende Antrieb umfasst im Gegensatz bspw. zur US 2,702,978 A bspw. einen in Fahrtrichtung querliegenden Motor, der parallel zur Schneidachse die Antriebswelle drehen lässt. Durch eine solche Anordnung kann an beiden Seiten des Messerbalkens randnah gearbeitet werden. Bevorzugt ist der Motor mittig und parallel zur Schneidachse angeordnet. Hierdurch wird erreicht, dass zur besseren Handhabung einer mit einer erfindungsgemäßen Anordnung ausgestatteten handgeführten Reinigungs- und Pflegegerätes dieses einen tief liegenden Motor umfasst, was eine bessere Handhabung des Reinigungs- und Pflegegerätes mit der Antriebseinheit ermöglicht. Des Weiteren wird durch den tiefliegenden Motor das Sichtfeld des Bedieners auf die Messerklingen beim Schneidvorgang nicht verdeckt. Um die Schneidvorrichtung mit dem hinter der Schneidvorrichtung, beispielsweise dem Schneidmesser liegenden Antrieb, der einen querliegenden Motor umfasst, anzutreiben ist vorgesehen, dass die Antriebswelle über ein Kegelradgetriebe mit einer vertikalen Antriebsachse der Arbeitseinheit verbunden ist. Bevorzugt ist die erfindungsgemäße Arbeitseinheit mit Schneidvorrichtung an ein Reinigungs- und Pflegegerät, wie aus der DE 10 2014 010 692 A1 bekannt, anschließbar. Die bedienerfreundliche werkzeuglose Montage der Arbeitseinheit mit Schneidvorrichtung ist hierbei besonders vorteilhaft. Insbesondere kann zum Antrieb der Arbeitseinheit beispielsweise der Motor des Reinigungs- und Pflegegerätes eingesetzt werden.

Das Reinigungs- und Pflegegerät kann durch die Arbeitseinheit mit Schneidvorrichtung für unterschiedliche Einsatzzwecke eingesetzt werden. Beispielsweise kann die in der DE 10 2014 010 692 A2 gezeigte Walzenbürste, der Reinigungs- und Pflegevorrichtung, die von einem Elektromotor beispielsweise über einen Riemenantrieb angetrieben wird, gegen eine Antriebseinheit der Erfindung mit einer Schneidvorrichtung bevorzugt werkzeuglos getauscht werden. Die Antriebseinheit gemäß der Erfindung mit Schneidvorrichtung wird dann vom selben Elektromotor wie die Walzenbürste der Reinigungs-und Pflegevorrichtung der DE 10 2014 010 692 A2 angetrieben. Damit wird ein handgetriebenes Reinigungs- und Pflegegerät zur Verfügung gestellt, das für ganz unterschiedliche Zwecke eingesetzt werden kann und zwar durch einfachen Tausch beispielsweise der Walze gegen die erfindungsgemäße Antriebseinheit mit Schneidvorrichtung beispielsweise zu einem Schneidgerät. Bevorzugt ist für einen leichten Tausch die Antriebswelle der Schneidvorrichtung, die parallel zu einer Schneidachse der Schneidvorrichtung ist, über ein Getriebe, bevorzugt ein Kegelradgetriebe, mit der Antriebsachse bzw. Antriebswelle des Elektromotors verbunden. Dies lässt einen leichten Tausch einer Schneidvorrichtung und bspw. einer Walzenbürste, die von einem Elektromotor einer Reinigungs- und Pflegeeinrichtung angetrieben wird, zu. Mit Hilfe des Kegelradantriebs kann die horizontale über die Antriebswelle des Elektromotors der Reinigungs- und Pflegeeinrichtung eingeleitete Drehenergie in eine vertikale Bewegung umgesetzt werden, die wiederrum beispielsweise auf zwei beispielsweise exzentrisch angeordnete, um 180° versetzte, kreisförmige Scheiben wirken und zu einer translatorischen Bewegung eines Ober- und eines Untermessers einer Schneideinrichtung führen. Die Umsetzung der horizontalen in eine vertikale Bewegung, die die Schneidvorrichtung antreibt, erfolgt somit durch das Kegelradgetriebe.

In einer besonders bevorzugten Ausbildung der Erfindung weist die Schneidvorrichtung eine Schnittbreite im Bereich 100 mm bis 500 mm auf. Ganz besonders bevorzugt ist eine Schnittbreite von 350 mm. Eine derartige Schnittbreite stellt sicher, dass in Randbereichen der Rasenstreifen sicher geschnitten und entfernt werden kann. Des Weiteren können mit derartigen Schnittbreiten auch kleine Wiesenflächen bzw. Rasenflächen mit Blättern gemäht werden. Rasenmäher für kleine Gärten bzw. Kleingärten beginnen im Allgemeinen mit einem Schnittdurchmesser von 280 mm. Um Vibrationen, die durch translatorische oszillierende Bewegungen entstehen, herabzusetzen, ist es besonders vorteilhaft, wenn die Schneidvorrichtung über zwei gegenläufige Schneidmesser verfügt. Beim Einsatz von zwei gegenläufigen Schneidmessern wird gegenüber einem oszillierenden und einem feststehenden Messer die Schwingungsamplitude halbiert und hierdurch auch die Vibrationen stark reduziert.

Eine Schneidvorrichtung mit zwei Schneidmessern, die gegenläufig ausgebildet sind, umfasst bevorzugt ein Obermesser und ein Untermesser. Sowohl Obermesser als auch Untermesser weisen spitze Messerklingen auf. Die spitzen Messerklingen können sich unter Belastung leicht verbiegen und somit das Schnittergebnis beeinträchtigen.

Der Nachteil der hohen Elastizität von Ober- als auch Untermesser kann jedoch vorteilhaft genutzt werden, wenn das Obermesser vorgespannt wird. Durch das Vorspannen des Obermessers kann ein besseres Schnittergebnis als bei nicht vorgespanntem Obermesser erreicht werden. Wie bei einer Schere schneiden die Messerklingen nämlich immer an der Kontaktfläche zwischen Ober- und Untermesser. Durch eine Vorspannung haben die Messer einen Abstand untereinander, der zur Messerklinge gerichtet immer kleiner wird. Der Kontaktpunkt der Schnittkanten des Ober- und des Untermessers steht dann unter Vorspannung. Die Vorspannung gewährleistet dann, dass die Schneidkanten im Betrieb immer in Kontakt bleiben. Ist die Vorspannung nicht ausreichend oder nicht vorhanden, so kann Schnittgut, wie beispielsweise Grashalme bzw. Grasblätter eines Rasens, nicht geschnitten werden. In einem solchen Fall knickt das Schnittgut wie beispielsweise der Grashalm dann ab, da dann die Kontaktflächen zwischen Ober- und Untermesser nicht ausreichend sind. Mit der erfindungsgemäßen Einrichtung wird aufgrund des erfindungsgemäßen Aufbaus gerade eine so große Vorspannung zur Verfügung gestellt, dass ein Schnitt auch von Grasblättern eines Rasens sichergestellt wird.

Um die Vorspannung zu erzeugen wird in einer Ausführungsform ein Einsatz bevorzugt zusätzlich zwischen Ober- und Untermesser eingebracht, der für einen derartigen Abstand zwischen Ober- und Untermesser sorgt, dass eine für einen sauberen Schnitt ausreichende Vorspannung beispielsweise auf das Obermesser aufgebracht wird, wobei die Vorspannung zur Messerklinge gerichtet immer kleiner wird. Durch die Elastizität der Klingen wird trotz der Vorspannung die Reibung und somit die benötigte Motorleistung reduziert. Der Abstand von Ober- und Untermesser oder der zusätzliche Abstand, der zur Vorspannung führt durch den Einsatz, beträgt 1 - 2 mm, idealerweise zwischen 1,3 mm und 1,5 mm. Der parallele Abstand der Laschen des Antriebes, die wiederrum zu einem Abstand von Ober- und Untermesser führen und beispielsweise auch bei Heckenscheren vorliegen und für eine zentrische Krafteinleitung der aufeinanderliegenden, entgegengesetzten Exzenterscheiben sorgen , liegt bei ungefähr 3 mm. Beabstandete Ober- und Untermesser, stehen zunächst nicht unter Vorspannung. Daher ist mit einer derartigen Anordnung zwar das Schneiden einer Hecke möglich, nicht aber das von Gras, bspw. Grasblättern eines Rasens, da bei einer derartigen Anordnung ein Grashalm bzw. ein Grasblatt einfach abknicken würde. Das Schneiden von Gras ist, wie die Erfinderin herausgefunden hat, nur dann möglich, wenn die Messer, also Ober- und Untermesser, sehr eng aufeinander gleiten. Insbesondere für das Schneiden von Grasblättern ist das enge Aufeinanderliegen zentral. Hierfür ist eine ausreichende Vorspannung nötig, die in einer Ausführungform durch den zusätzlichen Abstand aufgebracht wird. Durch die ausreichende Vorspannung gelingt es bei der Erfindung überraschenderweise, dass die Messerklingen von Ober- und Untermesser immer an der Schnittfläche aufeinander liegen und Kontakt haben, so dass ein sauberer Schnitt insbesondere der Grasblätter eines Rasens sichergestellt wird. Ist der parallele Abstand der Laschen, der für einen reibungsarmen Betrieb von Ober- und Untermesser benötigt wird, 3 mm und der zusätzliche Abstand, der für die Vorspannung benötigt wird 1,5 mm, so ist die Gesamthöhe des Einsatzes 3 mm plus 1,5 mm, also 4,5 mm. In die Messerlaschen greifen die Exzenterscheiben zum Antrieb von Ober- und Untermesser ein.

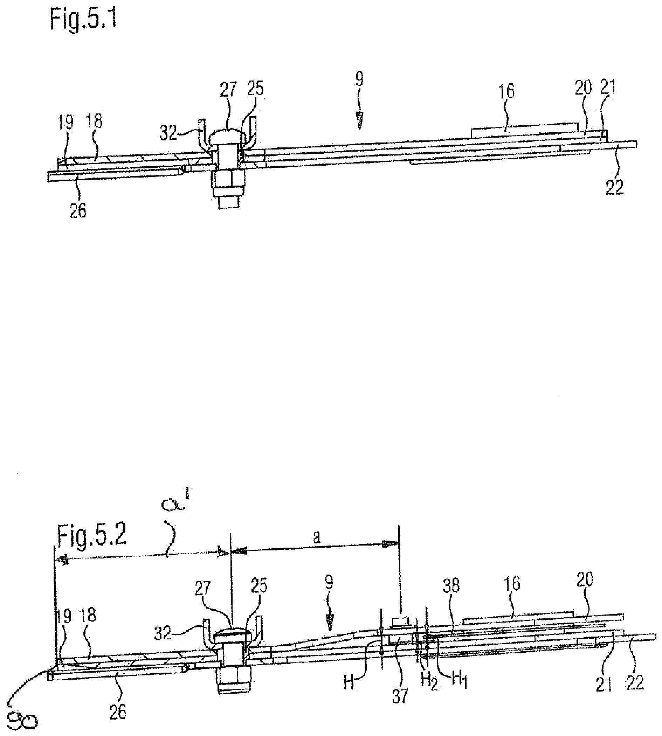

Die Laschen können entfernt zur Mittenposition von Ober- bzw. Untermesser angeordnet sein. Um eine optimale Vorspannkraft zu ermöglichen ist der Abstand von der Mitte des Messers und/oder Spannprofils zur Lasche, der in Fig. 5.2 dargestellt und mit a bezeichnet wird, zwischen 20 mm und 60 mm, idealerweise mit 48 mm in einem Ausführungsbeispiel gewählt. Idealerweise stimmt der Abstand a` von der Messerspitze von Ober- und Untermesser bis zur Mitte des Spannprofiles, an dem dieses mit Schrauben verspannt wird, in einem besonderen Ausführungsbeispiel in etwa mit dem Abstand a von der Mitte des Spannprofiles zum Einsatz bzw. Abstandshalter überein. Der Abstand a` liegt dann in einem Ausführungsbeispiel bei bspw. 43 mm. Damit liegt der Gesamtabstand a + a' von der Messerspitze von Ober- und Untermesser bis zum Abstandshalter, der zum Aufbringen der Vorspannung eingesetzt wird, im Bereich 60 mm bis 100 mm. Die Messer des Ober- bzw. Untermessers haben eine Stärke von 1 - 1,5 mm, idealerweise von 1,15 mm. Die Laschen des Ober- bzw. Untermessers haben im Bereich der Exzenter einen Abstand von 2 - 6 mm, insbesondere 3 mm bei der Ausführungsform gemäß Fig. 5.2, voneinander, um eine sichere Kraftübertragung von den Exzenterscheiben auf die Laschen zu erlangen. Der Abstand von 2 - 6 mm der Laschen ist konstruktiv gelöst. Ein konstruktiver Abstand der Laschen von 3 mm hat die Aufgabe, dass die Laschen nicht auf den gegenüber liegenden Exzenter springen können. Generell ist es so, dass die Laschen mit einem Abstand zueinander auf die versetzt angeordneten Exzenter die Kraft übertragen müssen.

Um die nötige Vorspannung aufzubringen, wird der Abstand bei der Ausführungsform gem. Fig. 5.2 nochmals um ungefähr 1,5 mm durch einen zusätzlichen Abstand erhöht, so dass die gesamte Höhe des Einsatzes, der zwischen die Messer eingebracht wird, zwischen 3,5 mm und 7,5 mm liegt, bevorzugt bei 4,5 mm, wenn der Abstand zur Reduzierung der Reibung bei 3 mm liegt. Würden die Laschen nicht beabstandet um die in der Erfindung angegebenen 2 bis 6 mm, sondern würden beispielsweisedirekt aufeinander liegen, so besteht die Gefahr, dass die Exzenterscheiben aus den Langlochführungen der Messerlaschen herausspringen. Um ein Überspringen der Laschen im Bereich der Langlochführungen zu vermeiden, kann des Weiteren eine Zwischenscheibe aus gehärtetem Stahl vorgesehen sein, wobei der äußere Durchmesser so groß ist, dass beide Langlöcher größtenteils überdeckt werden.

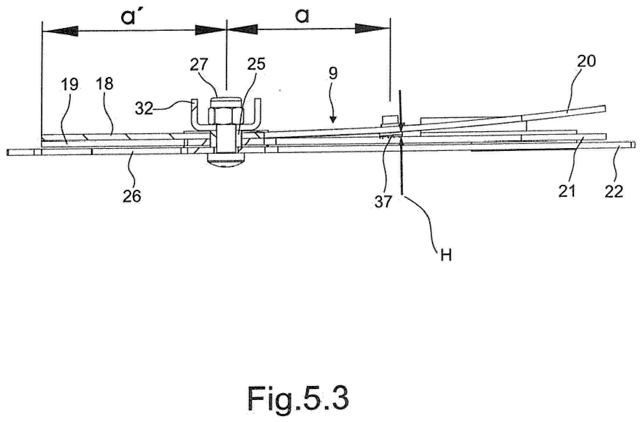

Wären die Messer nicht vorgespannt, so liegen sie so stramm aufeinander, dass eine sehr große Reibung entsteht. Bei einer Grasschere im Gegensatz zu einer Heckenschere ist es notwendig, dass die Messerschneiden in Kontakt bleiben. Am besten lässt sich dies mit einer Vorspannung mit einem zusätzlichen Abstand von 1,5 mm zusätzlich zu den 3 mm bei der Ausführungsform gem. Fig. 5.2 bewirken. In Fig. 5.3 ist eine alternative Ausgestaltung zum Aufbringen einer Vorspannung gegenüber Fig. 5.2 gezeigt. Bei der Ausgestaltung gemäß Fig. 5.3 liegen die Messer auf einer stabilisierenden Zwischenscheibe auf, und werden aufgrund des verwendeten härteren Federstahls nach oben gebogen und so Vorspannung aufgebaut.

Die im Stand der Technik gezeigten Vorspannungseinrichtungen, bspw. in der DE 38 212 35 A1, werden bei rotatorisch oszillierenden Messern im Gegensatz zu den translatorischen Messern der Erfindung eingesetzt. Die Vorspannung bei Messerbalken im Stand der Technik wird durch eine Vielzahl von Spannbacken, die im vorderen Bereich die Messer zusammendrucken, erzielt. Das Aufbringen von Vorspannungen der Messerbalken, wie im Stand der Technik gezeigt, im vorderen Bereich der Messer, wie bspw. in der DE 38 212 35 A1, hat den Nachteil, dass eine Grasentsorgung behindert wird. Hierdurch wird die Schnittqualität verschlechtert und ein sauberer Schnitt von Gras bspw. Grasblättern eines Rasens ist im Stand der Technik nicht möglich, sondern lediglich ein Abschneiden von Grashalmen, die bspw. in einer Wiese vorkommen. Im Gegensatz hierzu ermöglicht die Erfindung ein Abschneiden von Grasblättern einer Rasenfläche. Verantwortlich dafür, dass im Stand der Technik wie der DE 38 212 35 A1 nur ein Schnitt von Grashalmen und kein Schnitt von Grasblättern möglich ist, ist, dass bei im vorderen Bereich vorgespannten Messern das Schnittgut auf das Obermesser hinter den Messerklingen fällt und dann durch die oszillierende Bewegung des Obermessers zu den Seiten transportiert und abgelegt wird. Spanneinrichtungen im vorderen Bereich, wie im Stand der Technik, behindern damit den seitlichen Abtransport des Schnittgutes. Insbesondere zeigt dies eine Ausgestaltung gemäß dem Stand der Technik nach der US 2,702,978. Bei der US 2,702,978 wird das Gras geschnitten, vom Obermesser, das in der US 2,702,978 als "upper section" bezeichnet wird, in Schnittrichtung gedrückt und fällt dann nach vorne in das zu schneidende Gras. Hierdurch wird die Schnittqualität deutlich verringert. Wird die Vorspannung gemäß der Erfindung nicht im vorderen Bereich der Schnittmesser, sondern im hinteren Bereich von Ober- und Untermesser mittels Distanzelementes aufgebracht, bspw. mit einem Abstand von 60 - 100 mm zur Messerspitze, so ist es möglich, dass das Schnittgut nicht nach vorne fällt, sondern zu den Seiten abgeführt wird, insbesondere kontinuierlich abgeführt wird, ohne den Schnittvorgang und/oder die Schnittqualität zu beeinträchtigen, so dass ein Schneiden von Gras, insbesondere Grasblättern möglich ist. Besonders gute Schnittergebnisse werden erzielt, wenn die Vorspanneinrichtung, insbesondere die Einsätze, die den zusätzlichen Abstand zur Verfügung stellen, im Bereich von 60 mm bis 100 mm von den Spitzen des Schneidmessers entfernt sind.

Wird die Vorspannung durch den zusätzlichen Abstand in Folge des erhöhten Einsatzes nur im Bereich der Laschen aufgebracht, so ergibt sich das Problem, das je nach Lage der Laschen die Messer bzw. Klingen der Messer nur in einem Teilbereich, d. n. nur über einen Teil der Länge des Messers, eng aneinander anliegen würden, über einen anderen Teil der Länge nicht. In einer bevorzugten Ausführungsform der Erfindung wird in einem anderen Teilbereich der Länge eine zusätzliche Lasche vorgesehen, die dafür sorgt, dass auch dieser Teil des Messers bzw. der Klingen des Messers eng aneinander anliegen. Die Anzahl zusätzlicher Laschen ist nicht begrenzt, sondern richtet sich nach deren Notwendigkeit. So können ein, zwei etc. zusätzliche Laschen vorgesehen sein.

Um die Schneidvorrichtung in einer gewissen Höhe zum zu schneidenden Gras zu halten, ist vorgesehen, dass die Arbeitseinheit höhenverstellbare Laufräder umfasst.

Um auch randnahes Gras erfassen zu können, ist die erfindungsgemäße Antriebseinheit mit einer Leiteinrichtung, beispielsweise in Form von Gleitschuhen und Grasführungen, ausgestattet. Durch die Grasführung und die Leiteinrichtung können Grasblätter und/oder Grashalme in die Messerbalken und damit in den Schnittbereich der Schneidvorrichtung geführt werden.

Bevorzugt ist es, wenn die vertikale Welle auf zwei exzentrisch angeordnete, um 180° versetzte, kreisförmige Scheiben wirkt, wobei in einer bevorzugten Ausführungsform die kreisförmigen Scheiben von der vertikalen Welle umfasst werden. Durch diese Ausgestaltung wird erreicht, dass Ober- und Untermesser sich gegenläufig bewegen können. Gegenüber einem einzelnen Messer halbieren sich bei einer derartigen Ausführungsform die zurückgelegten Wege der Messer bei gleicher Schnittbreite. Durch die kürzeren Messer sind die Beschleunigungskräfte der Messer deutlich geringer als bei einem sehr langen Einzelmesser. Aufgrund der Gegenläufigkeit der Massenkräfte der Messer heben sich diese auf und es entsteht eine Schwingungstilgung. Die Schwingungstilgung wiederrum reduziert die Vibrationen der Vorrichtung auf ein Minimum und erhöht damit den Bedienkomfort für den Anwender signifikant. Dies ist darauf zurückzuführen, dass bei einem einzelnen Messer Schwingungen erzeugt werden, die das gesamte Gerät in seitliche Vibrationen versetzt. Wenn aber, wie im vorliegenden Fall, zwei Messer sich genau gegenläufig bewegen, ist die Schwingungsamplitude annähernd gleich groß, wobei die eine Schwingungsamplitude positiv und die andere negativ ist, so dass sich die auftretenden Kräfte gegenseitig aufheben und die Schwingungsamplituden getilgt werden.

Damit die beiden Messer, die auch als Ober- und Untermesser bezeichnet werden, ein gutes Schnittergebnis liefern, werden diese in einer weitergebildeten Ausführungsform zwischen einer Grundplatte und einem Spannprofil angeordnet. Der Abstand von Grundplatte und Spannprofil wird bevorzugt durch Distanzhülsen bestimmt, wobei die Höhe der Distanzhülsen bzw. der Abstand von Grundplatte und Spannprofil gerade so gewählt ist, dass die Schneidkanten der Messerklingen in Kontakt sind, aber die Reibung der Messerklingen gering ist. Dies ist insbesondere im Ausführungsbeispiel gem. Fig. 5.2 und 5.3 gezeigt.

Um die bei einem plötzlichen Blockieren der Schneidmesser auftretenden Kräfte aufnehmen zu können, ist in einer bevorzugten Ausführungsform vorgesehen, dass die Getriebeeinheit der Antriebseinheit, mit denen die Messer angetrieben werden, zwei Gehäuse, ein inneres und ein äußeres Gehäuse, umfassen. Hierbei nimmt das innere Gehäuse beispielsweise Querkräfte auf, die bei einer Messerblockade durch die Exzenterscheiben und durch die Kegelräder entstehen. Um Schnittgut aus dem Bereich der Messer zu fördern und die Sicht auf die Messerklingen zu gewährleisten, ist in einer weiteren Ausgestaltung vorgesehen, dass die Schneidvorrichtung eine Abdeckung umfasst.

Die Erfindung soll nachfolgend anhand der Zeichnungen näher beschrieben. Es zeigen:
- Figur 1:: eine erfindungsgemäße Antriebseinheit mit einer Schneidvorrichtung und Laufrädern
- Figur 2:: eine handgeführte Reinigungs- und Pflegevorrichtung ausgestattet mit einer erfindungsgemäßen Antriebseinheit mit Schneidvorrichtung
- Figur 3:: die Getriebeeinheit mit der Eingangswelle, die an ein handgetriebenes Reinigungs- oder Pflegegerät anschließbar ist
- Figur 4.1:: Draufsicht auf eine erste Ausführungsform einer Schnittvorrichtung mit zwei Schneidmessern in Form von Ober- und Untermesser
- Figur 4.2:: Draufsicht auf eine zweite Ausführungsform einer Schnittvorrichtung mit zwei Schneidmessern, wobei das Obermesser vorgespannt ist.
- Figur 4.3:: Draufsicht auf eine dritte Ausführungsform einer Schnittvorrichtung mit zwei Schneidmessern und einer zusätzlichen Lasche zum Aufbringen der Vorspannung
- Figur 5.1:: Schnitt entlang der Linie A-A in Figur 4.1 der ersten Ausführungsform einer Schnittvorrichtung mit zwei Schneidmessern
- Figur 5.2:: Schnitt entlang der Linie A-A in Figur 4.2 der zweiten Ausführungsform einer Schneidvorrichtung oder Schnittvorrichtung, wobei das Obermesser vorgespannt ist.
- Figur 5.3:: Schnitt entlang der Linie A-A in Figur 4.2 der zweiten Ausführungsform einer Schnittvorrichtung, wobei das Obermesser vorgespannt ist und sowohl Ober- wie auch Untermesser aus härterem Federstahl als in Fig. 5.2 bestehen.
- Figur 6:: Seitenansicht einer erfindungsgemäßen Antriebseinheit
- Figur 7:: alternative Anordnung einer Schneidvorrichtung mit zwei Schneidmessern

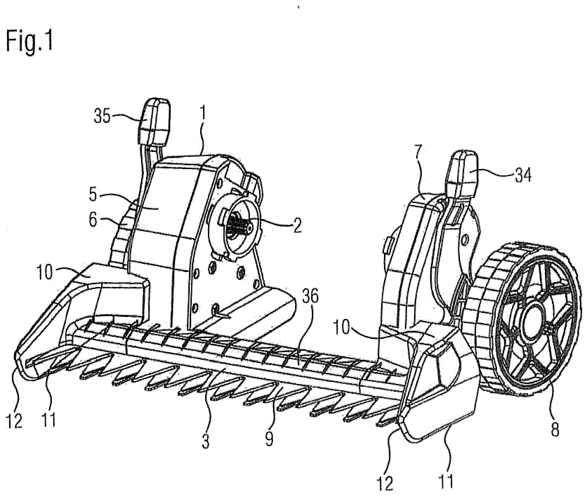

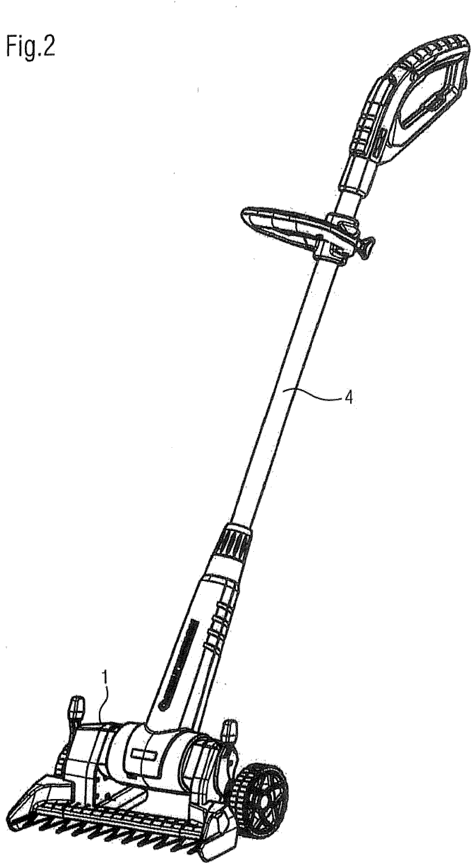

Figur 1 zeigt eine Antriebseinheit mit einer Schneidvorrichtung 1 mit seitlicher Antriebswelle 2 parallel zur Schneidachse 3. In montiertem Zustand ist die Schneidvorrichtung 1 angetrieben von einem Antrieb in Form eines Elektromotors. Der Elektromotor ist bevorzugt Teil eines handgeführten Reinigungs- und Pflegegerätes 4, wie in Figur 2 gezeigt. Die Antriebseinheit mit Schneidvorrichtung umfasst eine Getriebeeinheit 5 mit Getriebegehäuse mit höhenverstellbarem Laufrad 6 und auf der gegenüberliegenden Seite einem Stützarm 7 mit ebenfalls höhenverstellbarem Laufrad 8. Die Getriebeeinheit 5 wird von dem Elektromotor des handgeführten Reinigungs- und Pflegegerätes angetrieben. Die Getriebeeinheit 5 ist als Kegelradgetriebe ausgeführt, so dass die horizontal eingeleitete Drehenergie vertikal umgesetzt wird. Der Messerbalken 9 wird durch den Stützarm 7 und das Getriebegehäuse 5 gehalten. Die Messerenden werden begrenzt durch Leiteinrichtungen 10 mit Gleitschuh 11 und eine Grasführung 12. Randnahes Gras, insbesondere Grasblätter und/oder Grashalme werden durch die Grasführung 12 der Leiteinrichtung 10 in den Messerbalken geführt und geschnitten. Bevorzugt ist damit gewährleistet, dass auch dicht an der Wand oder Mauer wachsendes Gras bzw. Grasblätter bzw. Grashalme geschnitten werden. Die Drehzahl des Antriebes des Reinigungs- und Pflegegerätes ist mit 600 - 1.600 Umdrehungen pro Minute in sechs Stufen einstellbar. Die Antriebswelle 2 der Getriebeeinheit 5 wird bevorzugt vom Motor des handgeführten Reinigungs- und Pflegegerätes angetrieben. Die Höhenverstellung der Räder 8, 6 erfolgt mittels Hebeln 34, 35. Bevorzugt kann die Antriebseinheit mit Getriebe, insbesondere Kegelradgetriebe, direkt vom Elektromotor des handgeführten Reinigungs- und Pflegegerätes angetrieben werden. In einem solchen Fall ist ein leichter, bevorzugt werkzeugloser Tausch z. B einer Walze, die im Reinigungs- und Pflegegerät der DE 10 2014 010 692 A1 gezeigt ist, gegen die erfindungsgemäße Antriebseinheit mit Schneideinrichtung möglich. Ein Reinigungs- und Pflegegerät mit einer Schneidvorrichtung 1, die an den Elektromotor des Reinigungs- und Pflegegerätes, bevorzugt gemäß der DE 10 2014 010 692 A1, angeschlossen ist, zeigt Figur 2. Den Stiel zur Führung des handgeführten Reinigungs- und Pflegegerätes bezeichnet Bezugsziffer 4. Das Reinigungs- und Pflegegerät ist bevorzugt ein Reinigungs- und Pflegegerät wie in der DE 10 2014 010 692 A1 gezeigt.

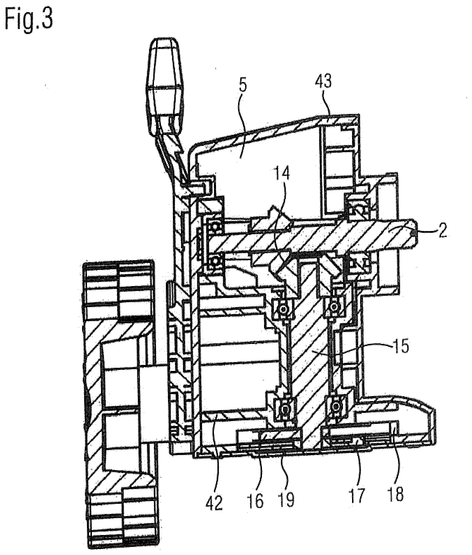

Figur 3 zeigt die Getriebeeinheit 5 mit einer Eingangswelle, die mit der Antriebswelle 2 identisch ist. Um die horizontal eingeleitete Drehenergie in eine vertikale umzusetzen, wird eine Kegelradgetriebestufe 14, bevorzugt mit der Übersetzung 1:1, verwendet. Die an die Kegelradgetriebestufe 14 angeschlossene vertikale Welle 15 hat im unteren Bereich zwei exzentrisch angeordnete um 180° versetzte kreisförmige Scheiben 16 und 17 zum Antrieb der Messer der Schneideinrichtung, bevorzugt über Laschen. In Figur 3 dargestellt sind des Weiteren auch das Obermesser 18 und das Untermesser 19. Das Getriebegehäuse 5 umfasst ein inneres Getriebegehäuse 42 und ein äußeres Getriebegehäuse 43.

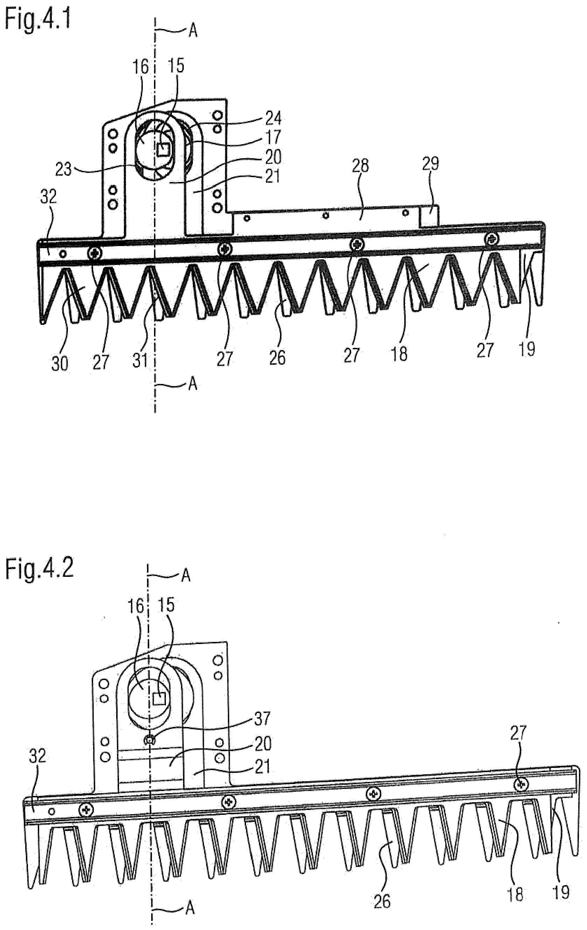

Die Umsetzung der rotatorischen Energie des Elektromotors in eine translatorische Bewegungsenergie des jeweiligen Ober- 18 und Untermessers 19 zeigt in einer ersten Ausgestaltung einer Schneidvorrichtung mit Obermesser 18 und Untermesser 19 Figur 4.1. Die translatorische Bewegung von Ober- 18 und Untermesser 19 ist bevorzugt eine oszillierende Bewegung.

In Figur 4.2 ist eine Draufsicht auf eine zweite Ausführungsform einer Schneidvorrichtung mit Obermesser 18 und Untermesser 19 gezeigt. Bei der zweiten Ausgestaltung der Schneidvorrichtung steht das Obermesser unter einer Vorspannung. Aufgebaut wird die Vorspannung durch ein Distanzelement bzw. einen Einsatz 37, das die Laschen bzw. Messerlasche 20 an Obermesser 18 zur Messerlasche 21 am Untermesser 19 auf Distanz hält, wie in der ersten Ausführungsform in Figur 5.2 gezeigt, und zusätzlich eine Spannung im Obermesser 18 aufbaut. Alternativ zur Ausgestaltung gemäß Fig. 5.2 kann die Vorspannung auch durch eine Ausgestaltung gem. Fig. 5.3 aufgebracht werden, wenn ein härterer Federstahl als bei der Ausführungsform gem. Fig. 5.2 verwendet wird.

Während bei der Ausführungsform von Figur 4.1, wie Figur 5.1 zeigt, Ober- und Untermesser ohne Distanz direkt aufeinander aufliegen, was zu hohen Reibungsverlusten führt, sorgt das Distanzelement bzw. der Einsatz dafür, dass Reibungsverluste vermieden werden. Die Höhe des Distanzelementes bzw. des Einsatzes, um Reibung zwischen Ober- und Untermesser zu vermindern, liegt bevorzugt im Bereich 2 bis 6 mm, insbesondere bevorzugt bei 3 mm. Wenn dann noch eine Vorspannung auf das Messer aufgebracht werden soll, wird die Höhe des Distanzelementes um 1,5 mm erhöht, das gesamte Distanzelement hat dann bevorzugt 4,5 mm Höhe. Dies ist in der Ausgestaltung in Figur 5.2 gezeigt. Figur 5.2 zeigt den Abstand a von der Mitte des Messers bzw. des Scanprofiles 32 zur Messerlasche am Obermesser und den Abstand a` vom Scanprofil zur Messerspitze. Bei der Ausführungsform gem. Fig. 5.2 weist das Distanzelement 37 zwei Höhen H₁ und H₂ auf, die zusammengenommen einen Abstand H ausbilden. Die Höhe H₁ ist in einem Ausführungsbeispiel ungefähr 3 mm und stellt einen konstruktiven Abstand der Laschen, mit denen Ober- und Untermesser angetrieben werden, zur Verfügung. Die zusätzliche Höhe H₁ sorgt dafür, dass eine Vorspannung aufgebaut wird, so dass Ober- und Untermesser und insbesondere die Schneidkanten in Kontakt sind und so ein sauberer Schnitt, insbesondere auch von Grasblättern, zur Verfügung gestellt wird.

Bei der alternativen Ausgestaltung gem. Fig. 5.3 ist eine Höhe H₁ nicht notwendig, um einen Abstand der Laschen zur Verfügung zu stellen. Hier wird lediglich durch das Einbringen eines einzigen Distanzstückes 37 eine Vorspannung auf das Obermesser aufgebracht. Voraussetzung hierfür ist auch, dass der gewählte Federstahl härter ist. In Fig. 5.3 bezeichnen gleiche Bezugsziffern gleiche Bauteile wie in Fig. 5.2, so Ober- und Untermesser 18, 19 und die Laschen 20, 21.

In der in Figur 5.3 gezeigten weiteren Ausführungsform der Erfindung mit einem härteren Federstahl für Ober- und Untermesser 18, 19 ist nur ein Distanzelement mit einer einzigen Höhe H von 1,3 mm zum Aufbau der Vorspannung gezeigt. Bei der Ausgestaltung von Fig. 5.3 hat sich gezeigt, dass auch ohne den konstruktiven Abstand der Laschen von 3 mm ein zuverlässiger Betrieb möglich ist. Ohne das Aufbringen einer Vorspannung durch den Abstandshalter 37 würden Ober- und Untermesser plan aufeinanderliegen, wie in Fig. 5.1 dargestellt. Mit dem Abstandshalter 37 und einem Abstand von H = 1,3 mm lässt sich eine ausreichende Vorspannung erzielen, so dass sich die Schneiden der Messerklingen beim Schnittvorgang unter Spannung berühren und somit bspw. Grasblätter von Rasenflächen in hoher Qualität geschnitten werden können.

Figur 5.1 ist eine Schnittansicht entlang des Schnittes A-A in Figur 4.1 der ersten Ausgestaltung der Schneidvorrichtung mit Ober- und Untermesser und Figur 5.2 eine Seitenansicht entlang des Schnittes A-A in Figur 4.2 der zweiten Ausgestaltung der Schneidvorrichtung mit Ober- und Untermesser 17, 18 wobei bei Figur 5.2 wie Figur 5.3 zwischen Ober- und Untermesser 18, 19 ein Einsatz 37 in Form eines Abstandshalters bzw. ein Distanzelement 37 eingebracht ist, der bzw. das dazu führt, dass das Obermesser 18 und Untermesser 19 sich bei der Ausführungsform gem. Fig. 5.2 ohne Reibungsverluste bewegen können. Des Weiteren steht sowohl bei Fig. 5.2 wie Fig. 5.3 das Obermesser 18 unter Vorspannung und liegt am Untermesser unter Spannung an, so dass ein optimales Schnittergebnis, insbesondere auch für Grasblätter erzielt wird. In Figur 5.2 ist die Höhe des Distanzelementes, das für eine reibungsarme translatorische Bewegung von Ober- und Untermesser sorgt, mit H₁ angegeben und die zusätzliche Höhe, die zur Vorspannung führt, mit H₂. Die Gesamthöhe des Distanzelementes setzt sich dann zusammen aus H = H₁ + H₂. In Fig. 5.3 ist nur eine Höhe H angegeben, die eine Vorspannung zur Verfügung stellt. Diese Höhe H beträgt ungefähr 1,3 mm.

Ein weiterer Vorteil einer Schneideinrichtung mit einem Ober- und einem Untermesser 17, 18, die gegenläufig sind, ist darin zu sehen, dass die Schwingungsamplitude halbiert und damit die Vibration, die durch die translatorische oszillierende Bewegung entsteht, deutlich herabgesetzt wird. Weiterhin wird dadurch der Verschleiß an Exzenterscheiben 16 und 17 reduziert. Die Messerlaschen 20 und 21, die in den Figuren 4.1 und 4.2 gezeigt sind, übertragen die translatorische oszillierende Bewegung von den Exzenterscheiben mit den jeweiligen Langlochführungen 23 und 24 auf das zugehörige Ober- und Untermesser 18, 19. Die Grundplatte 22 der Ober- und Untermesser 18, 19 hat im vorderen Bereich feststehende Zähne 26, die in der dargestellten Ausführungsform in Figur 4.2 2 mm vor den beweglichen Messern 18, 19 mit den Messerklingen 30 und 31 stehen. Dadurch wird ein erhöhter Schneidschutz gewährleistet, z. B. wird bei Kontakt mit Bäumen durch die beweglichen Messer mit Messerklingen 30, 31 die Rinde nicht beschädigt. Weiterhin besteht ein Abstand zwischen den feststehenden Zähnen 26 der Grundplatte 22 und dem Untermesser 19, um unnötige Reibungsverluste zu vermeiden. Damit Ober- und Untermesser ein gutes Schnittergebnis liefern, bewegen sich Ober- und Untermesser 18, 19 in den in den Figuren 4.1 bis 5.2 dargestellten Ausführungsformen zwischen der Grundplatte 22 und dem Spannprofil 32. Das Spannprofil wird durch Distanzhülsen 25 genau auf Abstand zur Grundplatte gehalten und mit Schrauben 27 verspannt. Das Spannprofil (32) verfügt im Allgemeinen über eine hohe Biege- und Verwindungssteifigkeit. Es gewährleistet bei Schneidern auf unebenem Rasen, dass der vorgegebene Abstand von Ober- und Untermesser durch die Distanzhülsen (25) bzw. den Einsatz immer konstant bleibt. Die Höhe der Distanzhülsen 25 ist derart bestimmt, dass die Schneidkanten, d. h. die Zähne 30, 31 von Obermesser und Untermesser 18, 19, in Kontakt sind, aber die Reibung zwischen den beiden gering ist. Um die Vorspannung der Messerklingen 30 und 31 an der Schneidfläche zu erhöhen, können zwischen den Spannbalken 28 und 29, die an die Laschen 20, 21 anschließen, im hinteren Bereich des Ober- und Untermessers Distanzelemente positioniert werden. Diese sind vorzugsweise aus Stahl oder Teflon, um die Reibung zwischen Ober- und Untermesser zu minimieren. Antriebsseitig kann die Vorspannung durch eine Erhöhung des Distanzelementes bzw. Abstandhalters 37 um 1,5 mm, wie in Figur 5.2 gezeigt, zwischen den Messerlaschen 20 und 21 eingestellt bzw. ermöglicht werden. Die Erhöhung des Abstandshalters um H₂ kann in einem Bereich 1 mm bis 3 mm liegen, je nachdem welche Vorspannung eingestellt werden soll. Bevorzugt wird durch den Einsatz die Lasche bzw. Messerlasche 20 nach oben angehoben und so die Vorspannung aufgebaut.

Alternativ zu der in den Figuren 4.1 und 5.1 gezeigten ersten Ausführungsform einer Schneidvorrichtung mit einem Obermesser 18 und einem Untermesser 19 zeigen die Figuren 4.2 und 5.2 eine zweite Ausführungsform einer Schneidvorrichtung. Wie bei der ersten Ausführungsform zeigt auch die zweite Ausführungsform ein Obermesser 18 und ein Untermesser 19 mit spitzen Messerklingen. Nachteilig an den Messerklingen von Ober- und Untermesser ist, dass sich die Messerklingen unter Belastung leicht verbiegen und somit kein zufriedenstellendes Schnittergebnis erreicht wird. Die Elastizität der Messerklingen kann aber auch genutzt werden. So kann gemäß der zweiten in den Figuren 4.2 und 5.2 gezeigten Ausführungsform ein Einsatz 37 in Form eines Abstandshalters eingebracht werden. Durch das Einbringen des Einsatzes 37 wird zum einen ein Abstand zwischen Ober- und Untermesser eingestellt, so dass die Reibung minimiert wird und dieser Einsatz noch erhöht, so dass eine Vorspannung auf das Obermesser 18 aufgebracht wird. Die Vorspannung sorgt, gemäß der Erfindung dafür, dass wenn Sie im hinteren Bereich der Messer, wie im vorliegenden Fall, aufgebracht werden, dass ein sauberer Schnitt von Grasblättern eines Rasens möglich ist. Bevorzugt ist die Höhe H₁ des Einsatzes zur Reduzierung von Reibung von Ober- und Untermesser ungefähr 3 mm. Die zusätzliche Höhe H₂ zum Aufbau der Vorspannung beträgt bevorzugt 1,5 mm, so dass die Gesamthöhe des Einsatzes 4,2 bis 4,5 mm ist. Besonders bevorzugt ist es, wenn H₁ = 0 mm und H₂ = H = 1,3 mm gewählt wird, d. h. Ober- und Untermesser sind angeordnet wie in Fig. 5.3 gezeigt. Durch die Vorspannung gem. Fig. 5.2 und Fig. 5.3 haben Ober- und Untermesser 18, 19 einen Abstand zueinander, der zur Messerklinge gerichtet immer kleiner wird. Der Kontaktpunkt der Schnittkanten von Ober- und Untermesser 18, 19 steht dann unter Vorspannung. Die Vorspannung gewährleistet, dass die Schneidkanten im Betrieb immer in Kontakt bleiben. Ist die Vorspannung nicht ausreichend oder nicht vorhanden, so kann Schnittgut, wie beispielsweise Grashalme, nicht geschnitten werden. In einem solchen Fall knickt das Schnittgut, wie beispielsweise der Grashalm, dann ab. Ein weiterer Vorteil der Elastizität ist, dass durch die Elastizität der Klingen die Reibung und somit die benötigte Motorleistung reduziert wird. Der Abstand, der durch den Einsatz bzw. den Abstandhalter zwischen Ober- und Untermesser als Gesamthöhe eingestellt wird, beträgt bevorzugt 4 - 6 mm. Der zusätzliche Abstand zum Aufbringen der Vorspannung beträgt bevorzugt 1 - 2 mm, idealerweise 1,3 bis 1,5 mm. Des Weiteren ist der Einsatz 37, insbesondere der Abstandshalter, entfernt von der Mitte des Ober- bzw. Untermessers entfernt. Je größer der Abstand des Einsatzes bzw. Abstandshalters 37 von der Mitte des Messers ist, umso unempfindlicher ist die Federvorspannung gegenüber Abstandstoleranzen. Ein Abstand a von 20 - 60 mm, idealerweise von 48 mm, ist am bevorzugtesten, um eine optimale Vorspannkraft zu ermöglichen. Je größer der Abstand des Einsatzes 37 von der Mitte des Spannprofils 32 ist, umso geringer ist die Vorspannkraft bei gleichem Laschenabstand durch den Einsatz 37. Bei kleinerem Abstand des Einsatzes 37 von der Mitte des Spannprofils 32 könnte der Laschenabstand durch Verkürzung des Einsatzes 37 verkleinert werden, um die gleiche Federvorspannung bzw. Vorspannung zu erhalten. Die Vorspannung auf die Schneidkanten ist jedoch sehr empfindlich gegenüber Fertigungstoleranzen. Ungünstige Fertigungstoleranzen können bei zu geringem Abstand a zu einem Verlust der Vorspannung führen und damit die Schnittqualität negativ beeinflussen.

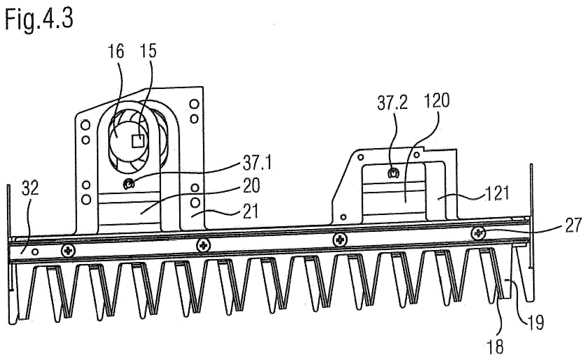

Bei der Ausführungsform, die in Fig. 4.2 abgebildet ist, wird die Vorspannung durch den im Bereich der Lasche angeordneten Abstandshalter bzw. Einsatz 37 aufgebracht. Problem bei einer derartigen Ausführungsform ist, dass die Vorspannung nur in dem Teilbereich des Obermessers 18 aufgebracht wird, der der Lasche gegenüberliegt. Bereiche des Obermessers, die entfernt von der Lasche sind, beispielsweise an der gegenüberliegenden Seite, weisen dann keine oder nur eine unzureichende Vorspannung auf, so dass über die gesamte Breite des Messers kein gleichmäßig gutes Schnittergebnis erreicht wird. In einer weitergebildeten Ausführungsform gemäß Fig. 4.3 ist das Messer mit einer zusätzlichen Lasche bzw. einer zusätzlichen Messerlasche 120 für das Obermesser und einer zusätzlichen Messerlasche 121 für das Untermesser versehen. Die zusätzliche Lasche 120, 121 umfasst wie die Laschen 20, 21 einen Einsatz 37.2 in Form eines Abstandshalters. Dieser Einsatz 37.2 dient alleine dazu, die Vorspannung aufzubringen , wie bei den Laschen 20, 21, die durch die Exzenterscheiben angetrieben werden. Daher ist es bei dem Einsatz 37.2 möglich, die Höhe des Einsatzes so zu wählen, dass nur die Vorspannung aufgebracht wird, also beispielsweise 1,5 mm. Natürlich wären auch größere Höhen, beispielsweise von 4,5 mm, möglich, wie bei dem Abstandshalter im Bereich der Laschen 20, 21. Durch diese Maßnahme wird sichergestellt, dass über die gesamte Breite des Messers Ober- und Untermesser an den Schneidkanten aneinander anliegen, so dass über die gesamte Breite ein gutes Schnittergebnis für Gras, insbesondere auch für Grasblätter eines Rasens, erreicht wird. Bei breiten Messern können eine Vielzahl zusätzlicher Laschen, bspw. zwei, drei etc. zusätzliche Laschen, vorgesehen sein. Insbesondere kann mit zwei Vorspannungseinrichtungen, d. h. zwei Laschen, wie in Fig. 4.3 dargestellt, eine gleichmäßige Verteilung der Vorspannung auf die Messerklingen erreicht werden. Die Variante, bei der zwei Vorspannungseinrichtungen eingesetzt werden, führt zu einem besseren Schnittergebnis, da mit nur einer Vorspannungsvorrichtung bzw. Lasche das Gras in dem gegenüberliegenden Bereich, wie in Fig. 4.2 dargestellt, nur unzureichend geschnitten wird. Auch gegenüber der in Fig. 4.1 dargestellten Anordnung konnten mit der Anordnung mit zwei Laschen in Fig. 4.3 die besten Schnittergebnisse für trockenes und nasses Gras erzielt werden.

Die im Stand der Technik gezeigten Vorspannungseinrichtungen, bspw. in der DE 38 212 35 A1 oder der US 2,702,978 A, werden bei rotatorisch oszillierenden Messern im Gegensatz zu den translatorischen Messern der Erfindung eingesetzt. Eine Ausgestaltung der Vorspannung, wie gezeigt, aufzubringen, ist bei translatorisch oszillierenden Messerbalken bislang unbekannt gewesen.

Üblicherweise wird die Vorspannung bei Messerbalken im Stand der Technik durch eine Vielzahl von Spannbacken, die im vorderen Bereich die Messer zusammendrücken, erzielt. Das Aufbringen von Vorspannungen der Messerbalken wie im Stand der Technik gezeigt im vorderen Bereich der Messer wie bspw. in der IUS 2,702,978 A hat den Nachteil, dass eine Grasentsorgung behindert wird. Hierdurch wird die Schnittqualität verschlechtert und ein sauberer Schnitt von Grasblättern ist im Stand der Technik nicht möglich, sondern lediglich ein Abschneiden von Grashalmen, die bspw. in einer Wiese vorkommen. Im Gegensatz hierzu ermöglicht die Erfindung mit im hinteren Bereich des Messers angeordneten Einsätzen zum Aufbringen der Vorspannung ein Abschneiden von Grasblättern einer Rasenfläche. Verantwortlich dafür, dass im Stand der Technik wie der DE 38 212 35 A1 oder der US 2,702,978 A kein Schnitt von Grasblättern möglich ist, ist, dass bei im vorderen Bereich vorgespannten Messern, das Schnittgut auf das Obermesser hinter den Messerklingen führt und dann durch die oszillierende Bewegung des Obermessers zu den Seiten transportiert und abgelegt wird. Spanneinrichtungen im vorderen Bereich wie im Stand der Technik behindern damit den seitlichen Abtransport des Schnittgutes. Insbesondere zeigt die eine Ausgestaltung gemäß dem Stand der Technik nach der US 2,702,978 A. Bei der US 2,702,978 A wird das Gras geschnitten, vom Obermesser, das in der US 2,702,978 A als "upper section" bezeichnet wird, in Schnittrichtung gedrückt und fällt dann nach vorne in das zu schneidende Gras. Hierdurch wir die Schnittqualität deutlich verringert. Wird die Vorspannung gemäß der Erfindung nicht im vorderen Bereich der Schnittmesser, sondern im hinteren Bereich von Ober- und Untermesser mittels Distanzelementen bzw. Einsätzen wie in Fig. 5.2 und Fig. 5.3 aufgebracht, so ist es möglich, dass das Schnittgut nicht nach vorne fällt, sondern zu den Seiten abgeführt wird, insbesondere kontinuierlich abgeführt wird, ohne den Schnittvorgang und/oder die Schnittqualität zu beeinträchtigen, so dass ein Schneiden von Grasblättern möglich ist. Besonders gute Schnittergebnisse werden erzielt, wenn die Vorspanneinrichtung, insbesondere die Einsätze, die den zusätzlichen Abstand zur Verfügung stellen, im Bereich 60 mm bis 100 mm von der Spitze des Schneidmessers entfernt sind.

Die Stärke der Messerklingen liegt bevorzugt zwischen 1 und 1,5 mm. Bevorzugt ist es, wenn die Messer sich elastisch verbiegen können, insbesondere zum Aufbau einer Vorspannung. Dünnere Messer mit einer Materialstärke kleiner 1 mm unterliegen einem höheren Verschleiß und können die gewünschte Vorspannung nicht erzielen. Materialstärken über 1,5 mm sind nicht elastisch genug und die Reibung an den Schneidkanten wäre zu hoch. Hierdurch würde die Motorleistung und der Messerverschleiß erhöht. Die Materialstärke der Messer zwischen 1 mm und 1,5 mm vermeidet überraschenderweise beide oben genannten Nachteile.

Um eine sichere Kraftübertragung auf Ober- und Untermesser sicherzustellen, hat sich herausgestellt, dass die Messerlaschen 20, 21 von Ober- und Untermesser im Bereich des Exzenters einen Abstand von 2 - 6 mm, insbesondere 3 mm aufweisen, um eine sichere Kraftübertragung von den Exzenterscheiben auf die Laschen zu erlangen . Liegen beide Laschen direkt aufeinander, so ist die Reibung zu hoch und es besteht die Gefahr, dass die Exzenterscheiben aus den Langlochführungen 23 und 24 der Messerlaschen herausspringen. Ein Überspringen der Messerlaschen 20 und 21 im Bereich der Langlochführungen wird vermieden, wenn eine Zwischenscheibe 38 aus gehärtetem Stahl vorgesehen ist. Der äußere Durchmesser der Zwischenscheibe ist so groß, dass beide Langlöcher der Messerlaschen größtenteils überdeckt werden. Neben dem Abstand zwischen den Messerlaschen wie zuvor beschrieben dient die Scheibe zusätzlich dazu, dass die Messerlaschen nicht auf den anderen Exzenter überspringen können. Dies ist insbesondere bei der Ausführungsform gem. Fig. 5.2 der Fall.

Im Falle eines plötzlichen Blockierens der Schneidmesser 18 und 19 durch das Schnittgut bei eingeschaltetem Motor ist das Getriebegehäuse 5 zweischalig aufgebaut. Das zweischalige Gehäuse nimmt die entstehenden Kräfte auf. Das zweischalige Gehäuse des Getriebes besteht aus einem inneren 42 und einem äußeren Gehäuse 43. Das innere Gehäuse 42 nimmt die Querkräfte auf, die bei der Messerblockade einerseits durch die Exzenterscheiben 16 und 17 und andererseits durch die Kegelräder 14 entstehen. Das zweischalige Gehäuse ist in Figur 3 gezeigt.

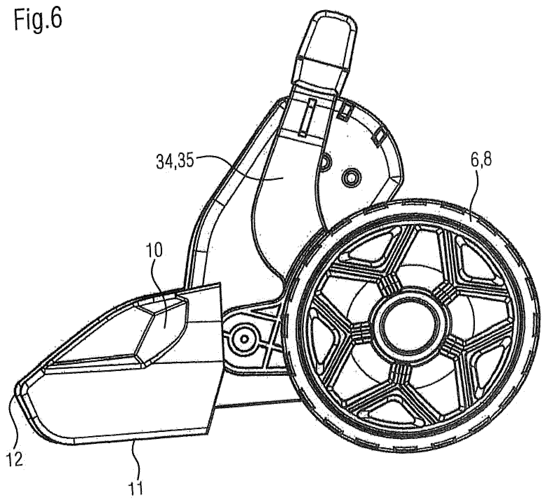

Figur 6 ist eine Seitenansicht der erfindungsgemäßen Antriebseinheit. In Figur 6 zu erkennen sind die Höhenverstellungen 34 und 35 der Laufräder, die in drei Stufen eine Schnitthöhe von jeweils 3, 4 und 5 mm ermöglichen. Dieser Bereich wird im Allgemeinen für Rasenflächen empfohlen. Um ein zu tiefes Einsinken der Messerklingen 18 und 19 in den Boden durch Kippen des Reinigungs- und Pflegegerätes zu vermeiden, sind an den Leiteinrichtungen 10 rechts und links der Messerklingen Gleitschuhe 11 angebracht. Die Abdeckung 36 der in Figur 1 gezeigten Vorrichtung dient dazu, das Schnittgut in den hinteren Bereich zu befördern, um die Sicht auf die Messerklingen zu gewährleisten.

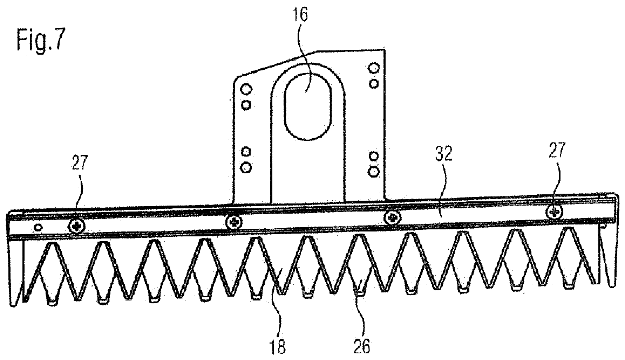

Figur 7 zeigt eine alternative Ausführungsform der Erfindung, wobei die Antriebsanordnung der Schneidvorrichtung in der Mitte der Schneidvorrichtung angeordnet ist. Der Motor ist dann vertikal angeordnet und wird in einem Gehäuse direkt über eine Getriebestufe zur Drehzahluntersetzung und einen Exzenterantrieb mit der Schneidvorrichtung verbunden. Diese Anordnung eignet sich besonders für ein Gerät, bei dem die Motorwelle vertikal direkt über eine Getriebestufe mit den Exzenterscheiben die Messer antreiben. Gleiche Bauteile wie in den vorausgegangenen Figuren werden mit denselben Bezugsziffern bezeichnet.

Mit der Erfindung wird eine leicht tauschbare Antriebseinheit mit einer Schneideinrichtung bzw. einer Schnitteinrichtung zur Verwendung in einem handgetriebenen Reinigungs- und Pflegegerät angegeben. Der Antrieb erfolgt mit demselben Motor wie der Antrieb beispielsweise einer Walze eines Reinigungs-und Pflegegerätes. Die Walze des Reinigungs- und Pflegegerätes und die Schneidvorrichtung kann werkzeuglos einfach gegen die Antriebseinheit mit Schneideinrichtung getauscht werden. Bei dem beschriebenen Reinigungs- und Pflegegerät können durch Auswechseln der Arbeitsvorrichtung unterschiedliche Funktionen im Haus und Garten zur Reinigung und Pflege zur Verfügung gestellt werden. Insbesondere ist dies möglich, weil sämtliche Arbeitsvorrichtungen werkzeuglos schnell ausgewechselt werden können.

Zwar wird auch der Stand der Technik gemäß der US 2,702,978 A durch einen Elektromotor angetrieben und es lassen sich unterschiedliche Arbeitsgeräte unten am Holm mit einer Überwurfmutter befestigen. Die Antriebswelle sitzt jedoch im Holm. Nachteilig daran ist, dass der Antriebsstrang sehr lang ist und alle Bauteile für die hohe Belastung beim Blockieren der Messer im Betrieb ausgelegt werden müssen. Dadurch ist das Gerät gemäß der US 2,702,978 A schwer und lässt sich nur mit großem Kraftaufwand bewegen. Bei der US 2,702,978 A sind um ein Eindringen beispielsweise von Rädern in den Boden zu verhindern, Laufwalzen anstelle von Rädern vorgesehen, die allerdings einen deutlich höheren Rollwiderstand als Räder aufweisen, wodurch ein Bediener eine hohe Kraft aufwenden muss. Im Gegensatz hierzu ermöglicht die Erfindung die Verwendung von Rädern aufgrund einer leichten Bauweise. Im Gegensatz ist bei der Erfindung die mechanische Belastung auf die Antriebswellen und Getriebeteile des Antriebsstrangs gering. Der Motor ist über dem Messer bei der Erfindung querliegend und das Messer wird über die beiden äußeren Gehäuseteile aufgenommen. Dadurch, dass der Messerbalken bei der Erfindung an den äußeren Enden konstruktiv gehalten wird, ist der Gesamtaufbau mechanisch steif und die Bauteile können leichter ausgelegt werden. Es treten keine vertikalen Biegekräfte an den äußeren Enden der Messerbalken auf, wie im Stand der Technik bei US 2,702,978 A, KR 20 2000 0004 787 U oder DE 38 212 385 A1. Im Gegensatz zu Geräten gemäß dem Stand der Technik ermöglicht die erfindungsgemäße Schneidvorrichtung das saubere Schneiden von Grasblättern eines Rasens. Dies ist insbesondere darauf zurückzuführen, dass der Einsatz zum Aufbringen der Vorspannkraft in den hinteren Bereich der Schneidmesser verlegt ist.

### Bezugsziffernliste

- 1.: Schneidvorrichtung
- 2.: Seitliche Antriebswelle an der Schneidvorrichtung
- 3.: Schneidachse
- 4.: Reinigungs- und Pflegegerät
- 5.: Getriebeeinheit
- 6.: Laufrad rechts
- 7.: Stützarm
- 8.: Laufrad links
- 9.: Messerbalken
- 10.: Leiteinrichtung
- 11.: Gleitschuh
- 12.: Grashalmführung
- 14.: Kegelradgetriebestufe
- 15.: Vertikale Welle
- 16.: Kreisförmige, exzentrisch angeordnete, obere Scheibe
- 17.: Kreisförmige, exzentrisch angeordnete, untere Scheibe
- 18.: Obermesser
- 19.: Untermesser
- 20.: Messerlasche am Obermesser
- 21.: Messerlasche am Untermesser
- 22.: Grundplatte
- 23.: Langlochführung obere Messerlasche
- 24.: Langlochführung untere Messerlasche
- 25.: Distanzhülsen
- 26.: Feststehende Zähne der Grundplatte
- 27.: Verbindungsschrauben
- 28.: Obere Vorspannlasche
- 29.: Untere Vorspannlasche
- 30.: Zahn des Obermessers
- 31.: Zahn des Untermessers
- 32.: Spannprofil
- 37, 37.1, 37.2: Einsatz bzw. Abstandhalter
- 38.: Zwischenscheibe
- 42.: Inneres Getriebegehäuse
- 43.: Äußeres Getriebegehäuse
- 90.: Messerspitze
- 120.: zusätzliche Lasche
- 121.: zusätzliche Lasche

Die Erfindung umfasst Aspekte, die in nachfolgenden Sätzen niedergelegt sind, die Teil der Beschreibung sind, aber keine Ansprüche gemäß J15/88.

### Sätze

1. Arbeitseinheit, bevorzugt montierbar an ein handgetriebenes Reinigungs-und Pflegegerät, ausgebildet mit
   einer Schneidvorrichtung (1)
   einer seitlich hinter der Schneidvorrichtung (1) angeordneten Antriebswelle (2) parallel zu einer Schneidachse der Schneidvorrichtung (1) dadurch gekennzeichnet, dass
   die Antriebswelle (2) über ein Getriebe, bevorzugt ein Kegelradgetriebe (14), insbesondere ein 90° Kegelradgetriebe, mit der Schneidvorrichtung verbunden ist, derart, dass bevorzugt eine Drehbewegung der Antriebswelle (2) in eine oszillierende, insbesondere translatorische Bewegung der Schneidvorrichtung (1) umgesetzt wird.
2. Antriebseinheit nach Satz 1,
   dadurch gekennzeichnet, dass
   die Antriebswelle (2) mit einer Antriebsvorrichtung, bevorzugt einem Elektromotor insbesondere eines handgeführten Reinigungs- und Pflegegerätes, verbunden ist.
3. Arbeitseinheit nach Satz 1 oder 2,
   dadurch gekennzeichnet, dass
   die Schneidvorrichtung (1) eine Schnittbreite im Bereich 100 mm bis 500 mm aufweist.
4. Antriebseinheit nach einem der Sätze 1 bis 3
   dadurch gekennzeichnet, dass
   die Schneidvorrichtung (1) bevorzugt zwei gegenläufige Schneidmesser (18,19), insbesondere ein Obermesser (18) und ein Untermesser (19) umfasst.
5. Antriebseinheit nach Satz 4,
   dadurch gekennzeichnet, dass
   zwischen Obermesser (18) und Untermesser (19) ein Einsatz (37, 37.1, 37.2), insbesondere ein Abstandshalter eingebracht ist, derart, dass durch Einstellung eines Abstandes von Ober- und Untermesser eine Vorspannung auf das Obermesser (18) aufgebracht wird.
6. Antriebseinheit nach Satz 5,
   dadurch gekennzeichnet, dass
   der durch den Einsatz (37, 37.1, 37.2), insbesondere Abstandshalter, eingestellte Abstand von Ober- und Untermesser im Bereich 1 bis 6 mm liegt und einen zusätzlichen Abstand von 1 bis 2 mm, bevorzugt 1,5 mm, umfasst zum Aufbau der Vorspannung.
7. Antriebseinheit nach einem der Sätze 4 bis 6,
   dadurch gekennzeichnet, dass
   das Obermesser (18) und das Untermesser (19) wenigstens eine Lasche (20, 21) umfassen.
8. Antriebseinheit nach Satz 4 bis 6,
   dadurch gekennzeichnet, dass
   das Obermesser (18) und das Untermesser (19) des Weiteren wenigstens eine zusätzliche Lasche (120, 121) umfassen.
9. Antriebseinheit nach einem der Sätze 1 bis 8,
   dadurch gekennzeichnet, dass
   der Einsatz, insbesondere der Abstandshalter, im Bereich der Lasche (20, 21) und/oder der zusätzlichen Lasche (120, 121) angeordnet ist.
10. Arbeitseinheit nach einem der Sätze 1 bis 9,
   dadurch gekennzeichnet, dass
   die Schneidvorrichtung (1) eine Getriebeeinheit (5), bevorzugt mit höhenverstellbarem Laufrad (6) und gegenüberliegend zur Getriebeeinheit einen Stützarm, bevorzugt mit höhenverstellbarem Laufrad (8), umfasst.
11. Arbeitseinheit nach wenigstens einem der Sätze 1 bis 10,
   dadurch gekennzeichnet, dass
   die Schneidvorrichtung (1) eine Leiteinrichtung (10), bevorzugt mit Gleitschuhen und Grashalmführung, umfasst.
12. Arbeitseinheit nach wenigstens einem der Sätze 1 bis 11,
   dadurch gekennzeichnet, dass
   die vertikale Antriebswelle wenigstens eine, bevorzugt zwei exzentrisch angeordnete, insbesondere um 180° versetzte, kreisförmige Scheiben (16, 17) umfasst.
13. Antriebseinheit nach wenigstens einem der Sätze 1 bis 12,
   dadurch gekennzeichnet, dass
   die vertikale Antriebswelle mit wenigstens einer, bevorzugt zwei exzentrisch angeordneten, insbesondere um 180° versetzten, kreisförmigen Scheiben (16, 17) in eine Öffnung, insbesondere ein Langloch der Lasche (20, 21) eingreift.
14. Antriebseinheit nach wenigstens einem der Sätze 1 bis 13,
   dadurch gekennzeichnet, dass
   der Einsatz, insbesondere der Abstandshalter, an der Lasche (20, 21) und/oder der zusätzlichen Lasche (120, 121) angeordnet ist.
15. Arbeitseinheit nach wenigstens einem der Sätze 1 bis 14,
   dadurch gekennzeichnet, dass
   die Schneidvorrichtung (1) eine Grundplatte (22) und ein Spannprofil (32) umfasst, wobei das oder die Schneidmesser zwischen Grundplatte (22) und Spannprofil (32) angeordnet sind.
16. Arbeitseinheit nach einem der Ansprüche 1 bis15,
   dadurch gekennzeichnet, dass
   Grundplatte (22) und Spannprofil (32) durch Distanzhülsen beabstandet sind.
17. Arbeitseinheit nach einem der Sätze 1 bis 16,
   dadurch gekennzeichnet, dass
   die Höhe der Distanzhülsen (25), bevorzugt aus Teflon und/oder Stahl, derart gewählt ist, dass Schneidkanten der Schneidmesser (18,19) in Kontakt bei nur geringer Reibung sind.
18. Arbeitseinheit nach einem der Sätze 1 bis 17,
   dadurch gekennzeichnet, dass
   die Getriebeeinheit (5) ein inneres (32) und ein äußeres Gehäuse (33) umfasst.
19. Arbeitseinheit nach einem der Sätze 1 bis 18,
   dadurch gekennzeichnet, dass
   die Schneidvorrichtung (1) eine Abdeckung umfasst.

## Patentansprüche

1. Arbeitseinheit, bevorzugt montierbar an ein handgetriebenes Reinigungs-und Pflegegerät, ausgebildet mit
einer Schneidvorrichtung (1), insbesondere zum Schneiden von Grasblättern eines Rasens,
einer seitlich hinter der Schneidvorrichtung (1) angeordneten Antriebswelle (2) parallel zu einer Schneidachse der Schneidvorrichtung (1) **dadurch gekennzeichnet, dass**
die Antriebswelle (2) über ein Getriebe, bevorzugt ein Kegelradgetriebe (14), insbesondere ein 90° Kegelradgetriebe, mit der Schneidvorrichtung verbunden ist, derart, dass eine Drehbewegung der Antriebswelle (2) in eine oszillierende, insbesondere translatorische Bewegung von Obermesser (18) und Untermesser (19) umgesetzt wird.

2. Antriebseinheit nach Anspruch 1,
**dadurch gekennzeichnet, dass**
die Antriebseinheit wenigstens einen Motor, insbesondere einen Elektromotor, umfasst, der bevorzugt mittig und parallel zur Schneidachse (3) angeordnet ist und der mit der Antriebswelle verbunden ist, derart, dass sich die Antriebswelle parallel zur Schneidachse drehen lässt.

3. Antriebseinheit nach Anspruch 1 oder 2,
**dadurch gekennzeichnet, dass**
die Antriebswelle (2) mit der Antriebsvorrichtung insbesondere eines handgeführten Reinigungs- und Pflegegerätes verbunden ist.

4. Arbeitseinheit nach einem der Ansprüche 1 bis 3,
**dadurch gekennzeichnet, dass**
die Schneidvorrichtung (1) eine Schnittbreite im Bereich 100 mm bis 500 mm aufweist und/oder
die Schneidvorrichtung (1) bevorzugt zwei gegenläufige Schneidmesser (18,19), insbesondere ein Obermesser (18) und ein Untermesser (19) umfasst.

5. Antriebseinheit nach Anspruch 4,
**dadurch gekennzeichnet, dass**
zwischen Obermesser (18) und Untermesser (19) ein Einsatz (37, 37.1, 37.2), insbesondere ein Abstandshalter eingebracht ist, derart, dass durch Einstellung eines Abstandes von Ober- und Untermesser eine Vorspannung auf das Obermesser (18) aufgebracht wird, insbesondere der durch den Einsatz (37, 37.1, 37.2), insbesondere Abstandshalter, eingestellte Abstand von Ober- und Untermesser im Bereich 0 bis 6 mm liegt und einen zusätzlichen Abstand von 1 bis 2 mm, bevorzugt 1,5 mm, umfasst zum Aufbau der Vorspannung und/oder die Einsätze von den Messerspitzen (90) im Bereich 60 bis 100 mm entfernt sind

6. Antriebseinheit nach einem der Ansprüche 4 bis 6,
**dadurch gekennzeichnet, dass**
das Obermesser (18) und das Untermesser (19) wenigstens eine Lasche (20, 21) umfassen und/oder
das Obermesser (18) und das Untermesser (19) des Weiteren wenigstens eine zusätzliche Lasche (120, 121) umfassen.

7. Antriebseinheit nach Anspruch 6,
**dadurch gekennzeichnet, dass**
der Einsatz, insbesondere der Abstandshalter, im Bereich der Lasche (20, 21) und/oder der zusätzlichen Lasche (120, 121) angeordnet ist.

8. Arbeitseinheit nach wenigstens einem der Ansprüche 1 bis 7,
**dadurch gekennzeichnet, dass**
die Schneidvorrichtung (1) eine Leiteinrichtung (10), bevorzugt mit Gleitschuhen und Grashalmführung, umfasst.

9. Arbeitseinheit nach wenigstens einem der Ansprüche 1 bis 8,
**dadurch gekennzeichnet, dass**
die Antriebswelle (2) wenigstens eine, bevorzugt zwei exzentrisch angeordnete, insbesondere um 180° versetzte, kreisförmige Scheiben (16, 17) umfasst.

10. Antriebseinheit nach wenigstens einem der Ansprüche 1 bis 9,
**dadurch gekennzeichnet, dass**
die vertikale Antriebswelle mit wenigstens einer, bevorzugt zwei exzentrisch angeordneten, insbesondere um 180° versetzten, kreisförmigen Scheiben (16, 17) in eine Öffnung, insbesondere ein Langloch der Lasche (20, 21) eingreift und/oder
der Einsatz, insbesondere der Abstandshalter, an der Lasche (20, 21) und/oder der zusätzlichen Lasche (120, 121) angeordnet ist.

11. Arbeitseinheit nach wenigstens einem der Ansprüche 1 bis 10,
**dadurch gekennzeichnet, dass**
die Schneidvorrichtung (1) eine Grundplatte (22) und ein Spannprofil (32) umfasst, wobei das oder die Schneidmesser zwischen Grundplatte (22) und Spannprofil (32) angeordnet sind und Insbesondere Grundplatte (22) und Spannprofil (32) durch Distanzhülsen beabstandet sind.

12. Arbeitseinheit nach einem der Ansprüche 1 bis 11,
**dadurch gekennzeichnet, dass**
die Höhe der Distanzhülsen (25), bevorzugt aus Teflon und/oder Stahl, derart gewählt ist, dass Schneidkanten der Schneidmesser (18,19) in Kontakt bei nur geringer Reibung sind.

13. Arbeitseinheit nach einem der Ansprüche 1 bis 12,
**dadurch gekennzeichnet, dass**
die Getriebeeinheit (5) ein inneres (42) und ein äußeres Gehäuse (43) umfasst.

14. Arbeitseinheit nach einem der Ansprüche 1 bis 13,
**dadurch gekennzeichnet, dass**
die Schneidvorrichtung (1) eine Abdeckung umfasst.

15. Handgeführtes Reinigungs- und Pflegegerät mit einer Antriebseinheit, insbesondere einem Motor, bevorzugt einem Elektromotor,
**dadurch gekennzeichnet, dass**
das handgeführte Reinigungs- und Pflegegerät eine Arbeitseinheit gemäß einem der Ansprüche 1 bis 14 umfasst, das bevorzugt an die Antriebswelle der Arbeitseinheit angeschlossen ist.
